# EUROPÄISCHE PATENTANMELDUNG

(11) **EP 2 031 245 A2**
(43) Veröffentlichungstag der Anmeldung: **04.03.2009**
(21) Anmeldenummer: 08014703.6
(22) Anmeldetag: 19.08.2008
(51) Int. Cl.: F03D 1/06

(54) **Rotorblatt sowie Windenergieanlage**

(30) Priorität: 03.09.2007 DE 102007041649
(71) Anmelder: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(57) **Zusammenfassung**

Die Erfindung betrifft ein Rotorblatt für eine Windenergieanlage, wobei das Rotorblatt (22) insbesondere zur temporären Reduzierung der Längserstreckung des Rotorblattes (22) während eines Rotorblatttransports bezogen auf die Rotorblattlängsrichtung mehrteilig, vorzugsweise zweiteilig ausgebildet ist, derart, dass die einzelnen Rotorblattsegmente (24, 26) zur Montage des Rotorblattes (22) in Längsrichtung hintereinander aneinandersetzbar sind, dass mindestens jeweils zwei Rotorblattsegmente (24, 26) drehfest oder drehbar miteinander verbindbar sind, wobei die einzelnen Rotorblattsegmente (24, 26) jeweils eine oder mehrere geeignete Ansatzflächen (28, 30)aufweisen, die im montierten Zustand des Rotorblattes (22) aneinander unmittelbar oder mittelbar anliegen, und dass mindestens eines der einzelnen Rotorblattsegmente (24, 26) mittels einer vorzugsweise steuer- und/oder regelbaren Spannvorrichtung in Richtung des Rotorzentrums einer Windenergieanlage (10) spannbar ist und/oder an einem anderem Rotorblattsegment (24, 26) und/oder an dem Blattanschluss und/oder an der Nabe (20) und/oder einem anderen Bauteil einer Windenergieanlage (10) mittelbar oder unmittelbar unter Spannung befestigbar ist.

## Beschreibung

Die vorliegende Erfindung betrifft eine Windenergieanlage sowie ein Rotorblatt für eine Windenergieanlage.

Rotorblätter werden heutzutage in immer größeren Abmessungen gebaut. Vornehmlich, aber nicht ausschließlich bei den sehr großen, nämlich sehr langen Rotorblättern stellt sich häufig das Problem, diese Rotorblätter an die Baustelle zu verbringen, nämlich an den Ort, an dem die Windenergieanlage errichtet wird. In der Regel werden die Rotorblätter auf eigens in entsprechender Weise ausgerüsteten Schwerlast - LKWs transportiert. Auch der Einsatz von Transportschiffen, Lasthubschraubem oder dergleichen wird mittlerweile angedacht oder umgesetzt. Insbesondere die immense Längserstreckung der Rotorblätter bereitet dabei häufig Probleme.

Ausgehend von diesem Stand der Technik ist es Aufgabe der vorliegenden Erfindung, ein Rotorblatt für eine Windenergieanlage anzugeben, das den Transport desselben zur Baustelle der Windenergieanlage erleichtert. Weiter soll eine Windenergieanlage angegeben werden, die mit einem derartigen Rotorblatt ausgerüstet werden kann.

Diese Aufgabe wird gelöst durch ein Rotorblatt mit den Merkmalen des Anspruches 1 sowie eine Windenergieanlage mit den Merkmalen des Anspruches 4.

Demnach ist ein Rotorblatt für eine Windenergieanlage bezogen auf die Rotorblattlängsrichtung mehrteilig, vorzugsweise zweiteilig oder dreiteilig ausgebildet, nämlich derart, dass die einzelnen Rotorblattsegmente zur Montage des Rotorblattes in Längsrichtung hintereinander aneinandersetzbar sind.

Dabei sind mindestens jeweils zwei Rotorblattsegmente drehfest oder drehbar miteinander verbindbar, wobei die einzelnen Rotorblattsegmente jeweils eine oder mehrere geeignete Ansatzflächen aufweisen, die im montierten Zustand des Rotorblattes aneinander anliegen. Weiter ist mindestens eines der einzelnen Rotorblattsegmente mittels einer vorzugsweise steuer- und/oder regelbaren Spannvorrichtung in Richtung des Rotorzentrums einer Windenergieanlage spannbar und/oder an einem anderem Rotorblattsegment und/oder an dem Blattanschluss und/oder an der Nabe und/oder einem anderen Bauteil einer Windenergieanlage mittelbar oder unmittelbar unter Spannung befestigbar.

Die erfindungsgemäße Mehrteiligkeit des Rotorblattes ermöglicht insbesondere, das Rotorblatt in bezogen auf dessen Längsrichtung mehreren Segmenten zu fertigen und diese Rotorblattsegmente separat an den Ort zu verfahren, an dem die Windenergieanlage erbaut werden soll bzw. an dem das Rotorblatt an die bereits bestehende Windenergieanlage montiert werden soll. Nach dem Transport der Rotorblattsegmente werden diese demnach an der Baustelle mittels geeigneter Verbindungsmittel zusammengesetzt. Die für die verwendeten Transporteinrichtungen vornehmlich maßgebliche Längserstreckung des Rotorblattes kann demnach bedarfsweise verringert werden. Die Längserstreckung des gesamten zusammengesetzten Rotorblattes teilt sich demnach auf die jeweiligen Längserstreckungen der Rotorblattsegmente auf.

Aufgrund der Mehrteiligkeit des Rotorblattes bezogen auf dessen Längserstreckung treten, insbesondere während des Betriebs der Windenergieanlage, in den Bereichen, in denen die Rotorblattsegmente nach der Montage durch die geeigneten Verbindungsmittel verbunden sind, also im Bereich der im montierten Zustand aneinander anliegenden Ansatzflächen, erhebliche Lasten / Kräfte auf bzw. greifen dort an. Mit der erfindungsgemäßen Spannvorrichtung wird dabei erreicht, dass diese erheblichen Lasten / Kräfte mindestens teilweise, vorzugsweise vollständig aufgenommen und/oder abgeleitet werden können.

Die mindestens eine Ansatzfläche des jeweiligen Rotorblattsegmentes verläuft bevorzugt senkrecht, also quer zur Längsrichtung des Rotorblattes. Mit anderen Worten ist das Rotorblatt in diesem Fall bezogen auf die Längserstreckung quergeteilt in die Rotorblattsegmente. Grundsätzlich sind aber auch andere winklige, von 90° gegenüber der Längsrichtung abweichende Verläufe der jeweiligen Ansatzfläche denkbar. Bevorzugt verlaufen die aneinander anliegenden Ansatzflächen benachbarter Rotorblattsegmente naturgemäß parallel zueinander. Die Ansatzflächen können beispielsweise flanschartig ausgebildet sein.

Die Rotorblattsegmente können, insbesondere an den Ansatzflächen, untereinander mit lösbaren Verbindungsmitteln verbunden sein bzw. verbindbar sein, dies können etwa Schrauben / Muttern - Kombinationen sein. Alternativ können aber natürlich auch unlösbare Verbindungen verwendet werden, etwa - je nach Material - Klebe- oder Schweißverbindungen. Die Art der verwendeten Verbindungsmittel hängt dabei stark davon ab, ob die Rotorblattsegmente untereinander drehbar oder drehfest verbunden werden.

In einer besonders bevorzugten Ausführungsform, in der das Rotorblatt beispielsweise aus drei oder mehr Segmenten besteht, ist vorgesehen, das Rotorblattsegment, das die Blattspitze umfasst - Blattspitzensegment -, an dem unmittelbar angrenzenden Teil drehbar zu befestigen, etwa mittels Kugeldrehverbindungen, Gleitlagern oder dergleichen. Dieses an das Blattspitzensegment angrenzende Rotorblattsegment kann wiederum mit dem - in Richtung des Blattanschlusses - nächsten Rotorblattsegment drehfest verbunden sein. Wie der Fachmann des Standes erkennt, ist hier eine Vielzahl von Möglichkeiten denkbar.

Die dem Rotorblatt zugeordneten Spannmittel können etwa Zugseile sein, Zugketten, Zugstränge, Zugstangen, Zugrohre oder dergleichen. Diese sind bevorzugt Teil einer Spannvorrichtung, mit der wenigstens ein Rotorblattsegment, bevorzugt wenigstens das Biattspitzensegment, in Längsrichtung, vorzugsweise in Richtung des Blattanschlusses des Rotorblattes, spannbar ist. Die Spannvorrichtung ist bevorzugt steuerbar und/oder regelbar und motorbetrieben.

Die Erfindung betrifft auch eine Windenergieanlage, die eines der erfindungsgemäßen Rotorblätter aufweist. Die Windenergieanlage verfügt dabei über einen Rotor, der mindestens ein, bevorzugt drei Rotorblätter aufweist, über einen Generator zur Umwandlung der mechanischen Energie des Rotors in elektrische Energie, wobei das Rotorblatt in der beschriebenen Weise in Längsrichtung mehrteilig ausgebildet ist und wenigstens eines der Rotorblattsegmente, vorzugsweise das das freie Ende, nämlich das die Spitze des Rotorblattes umfassende Rotorblattsegment - Blattspitzensegment - in Längsrichtung mittels einer Spannvorrichtung gespannt ist, vorzugsweise in Richtung des Blattanschlusses des Rotorblattes.

Dabei kann in einer bevorzugten Ausführungsform die Spannvorrichtung der Windenergieanlage mindestens ein, bevorzugt mehrere, Spannmittel aufweisen, insbesondere ein Zugseil, eine Zugkette, ein Zugstrang, eine Zugstange, ein Zugrohr oder dergleichen, das an einem der Rotorblattsegmente, bevorzugt dem Blattspitzensegment, befestigt ist, und das nach Führung entlang einer bestimmten Strecke in Richtung des Blattanschlusses an einem anderen Rotorblattsegment und/oder an dem Blattanschluss und/oder an der Nabe und/oder einem anderen Bauteil der Windenergieanlage mittelbar oder unmittelbar unter Spannung befestigt ist oder befestigbar ist.

Wie der Fachmann des Standes der Technik erkennt, weist die Spannvorrichtung neben einem oder mehreren Spannmitteln bevorzugt noch weitere Bauteile auf. Falls die Spannmittel zur Aufwicklung geeignet sind, also etwa seilartig, kettenartig, strangartig oder dergleichen ausgebildet sind, kann beispielsweise eine bevorzugt motorgetriebene Winde oder dergleichen eingesetzt werden, auf die das Spannmittel aufgewickelt wird, um durch ein geeignetes Aufwickeln eine ausreichende Spannung zu erzeugen zwischen dem zu spannenden Rotorblattsegment einerseits, insbesondere dem Blattspitzensegment, und dem Blattanschluss und/oder der Nabe und/oder einem anderen Bauteil der Windenergieanlage andererseits. Die Winde wird dabei bevorzugt dem Blattanschluss und/oder der Nabe und/oder dem anderen Bauteil der Windenergieanlage zugeordnet.

Ein weitere Ausführungsform der vorliegende Erfindung ist ein Verfahren zum Betreiben einer Windenenergieanlage mit einem Generator zur Umwandlung der mechanischen Energie eines Rotors in elektrische Energie, wobei der Rotor mindestens ein Rotorblatt aufweist, das bezogen auf seine Längsrichtung mehrteilig ausgebildet, nämlich in wenigstens zwei Rotorblattsegmente geteilt ist, wobei im montierten Zustand des Rotorblattes mindestens zwei der Rotorblattsegmente des Rotorblattes miteinander drehbar verbunden sind, und wobei zur - mindestens partiellen - Pitch-Regelung und/oder zur - mindestens partiellen - aktiven Stall-Regelung der Windenergieanlage die Windanstellwinkel mindestens eines der Rotorblattsegmente eingestellt werden, indem das mindestens eine Rotorblattsegment mindestens zeitweise relativ zu einem der anderen Rotorblattsegmente rotiert wird.

Dabei werden als Rotorblattsegmente, in die das Blatt erfindungsgemäß aufgeteilt ist, und die relativ zueinander rotiert werden, nur solche Rotorblattsegmente verstanden, die aerodynamisch relevant sind.

Das Verfahren betrifft dabei vornehmlich pitch-geregelte Windenenergieanlagen. Grundsätzlich ist das Verfahren aber auch für den Einsatz bei Windenergieanlagen mit aktiver Stall-Regelung denkbar.

Bekanntlich wird bei einer aktiven Stall-Regelung der Strömungsabrisseffekt (Stall-Effekt) durch die Blattverdrehung reguliert und kontrolliert. Dabei ist die Blätterverdrehung durch ein System ähnlich wie beim Pitch-System realisiert. Zwei Unterschiede mit der Pitch-Regelung sind dennoch zentral, wie der Fachmann weiß: Die Blätter drehen sich bei der aktiven Stall-Regelung gegenüber der Pitch-Regelung in die entgegensetzte Richtung. Des Weiteren ist für eine gleiche Regulierung bei der aktiven Stall-Regelung in der Regel ein kleinerer Winkel ausreichend als bei der Pitch-Regelung.

Mit dem Verfahren kann bei den mehrteilig ausgebildeten Rotorblättern mindestens ein Segment des jeweiligen Rotorblattes individuell relativ zu einem anderen Segment gepitcht werden, d.h. der Anstellwinkel des mindestens einen Rotorblattsegments zum Wind wird individuell und vorzugsweise unabhängig zu dem Anstellwinkel eines anderen Rotorblattsegment eingestellt bzw. geregelt. Im Stand der Technik wird dagegen das gesamte Rotorblatt einheitlich gepitcht.

Der Anstellwinkel des mindestens einen anderen Rotorblattsegments kann erfindungsgemäß selbst individuell verstellbar sein, insbesondere relativ zu einem weiteren Rotorblattsegment. Natürlich ist aber auch denkbar, dass das oder die anderen Rotorblattsegmente nicht um ihre Längsachse verdrehbar sind, sondern vielmehr in ihrer Relativposition zur Nabe unverändert bleiben.

Vorzugsweise wird das mindestens eine Rotorblattsegment zur Regelung der Leistungsabgabe der Windenergieanlage und/oder zur Reduktion des von der Windenergieanlage erzeugten Schalls relativ zu dem anderen Rotorblattsegment rotiert, insbesondere bei Windgeschwindigkeiten unterhalb der Abschaltgeschwindigkeit der Windenergieanlage. Die Rotation des mindestens einen Rotorblattsegmentes relativ zu dem mindestens einen anderen Segment erfolgt demnach vorzugsweise innerhalb des regulären Regelbetriebes. Naturgemäß kann diese Rotation aber auch einen Bremsvorgang bzw. einen Abschaltvorgang der Windenergieanlage einleiten.

In einer weiteren Ausführungsform der Erfindung ist das mindestens eine Rotorblattsegment zu dem mindestens einen anderen Rotorblattsegment steuerbar und/oder regelbar rotierbar, wobei das mindestens eine Rotorblattsegment eine Mehrzahl von unterschiedlichen Drehstellungen bzw. Drehpositionen relativ zu dem mindestens einen anderen Rotorblattsegment einnehmen kann, mindestens aber mehr als 2 Drehstellungen.

In einer weiteren Ausführungsform kann das mindestens eine Rotorblattsegment mittelbar oder unmittelbar abhängig von mindestens einem Betriebsparameter der Windenenergieanlage und/oder von der Windstärke und/oder von dem von mindestens einem Rotorblatt im Betrieb erzeugten Schall relativ zu dem anderen Rotorblattsegment rotiert werden.

Insbesondere kann das mindestens eine Rotorblattsegment mittelbar oder unmittelbar abhängig von der vorzugsweise momentanen Leistungsabgabe der Windenergieanlage und/oder der vorzugsweise momentanen Rotordrehzahl und/oder der vorzugsweise momentanen Rotordrehzahlbeschleunigung und/oder der vorzugsweise momentanen Belastung mindestens eines Rotorblattes relativ zu dem mindestens einen anderen Rotorblattsegment rotiert werden.

Dabei wird bevorzugt das die Spitze des Rotorblattes umfassende Rotorblattsegment - Blattspitzensegment - mindestens zeitweise relativ zu dem mindestens einen anderen Rotorblattsegment rotiert, insbesondere entlang der Längsachse des Blattspitzensegments.

In einer weiteren besonderen Ausführungsform wird das mindestens eine Rotorblattsegment erst dann gepitcht, wenn - bei entsprechenden Windbedingungen - die Nennleistung der Anlage erreicht wird. Diese erfindungsgemäße Ausführungsform hat dabei den Vorteil, den Schall der Windenergieanlage gegenüber den bekannten Windenergieanlagen zu reduzieren. Bekanntlich wird Schall aerodynamisch produziert und der Schall ist umso stärker, je größer die Geschwindigkeit des jeweiligen Flügelteiles im Wind ist. Durch das aus dem Wind Drehen des Blattspitzensegmentes bereits vor dem Erreichen der Nennleistung wird der Schall wirksam reduziert, ohne die Leistung der Anlage stark zu reduzieren.

Dies gilt insbesondere dann, wenn die Länge des Blattspitzensegmentes im Vergleich zur Gesamtlänge des Rotorblattes eher gering ist, vorzugsweise weniger als ein Drittel der Gesamtlänge beträgt, bevorzugt weniger als ein Viertel, besonders bevorzugt weniger als ein Achtel.

Wie oben beschrieben kann also mindestens eines der Rotorblattsegmente, vorzugsweise das die Spitze des Rotorblattes umfassende Rotorblattsegment - Blattspitzensegment -, steuerbar und/oder regelbar zu mindestens einem anderen Rotorblattsegment drehbar sein, vorzugsweise zu dem an das Blattspitzensegment unmittelbar angrenzenden Rotorblattsegment. Insbesondere können die Windanstellwinkel der unterschiedlichen Rotorblattsegmente unabhängig voneinander einstellbar sein.

Zu diesem Zweck kann die Windenergieanlage in einer weiteren Ausführungsform eine rotierbare, insbesondere im Wesentlichen starre Welle aufweisen, vorzugsweise eine rotierbare Stange, ein rotierbares Rohr oder dergleichen, die zur Übertragung von Drehmomenten auf eine oder mehrere Rotorblattsegmente, vorzugsweise auf das Blattspitzensegment, zumindest abschnittsweise entlang der Längsrichtung des Rotorblattes geführt ist, vorzugsweise im Inneren des Rotorblattes, und mittelbar oder unmittelbar drehfest mit einem oder mehreren der Rotorblattsegmente, vorzugsweise dem Blattspitzensegment, verbunden ist.

Über einen geeigneten, steuerbaren und/oder regelbaren Motorantrieb kann die Welle angetrieben und in Drehungen um ihre Längsachse versetzt werden und somit das mit der Welle drehfest verbundene Rotorblattsegment, etwa das Blattspitzensegment, relativ zu einem der anderen Rotorblattsegmente bewegt bzw. rotiert werden.

Die Welle ist bevorzugt in der vorstehend beschriebenen Weise mit mindestens einem der Rotorblattsegmente, insbesondere mit dem Blattspitzensegment, drehfest verbunden, allerdings an einem der anderen Rotorblattsegmente und/oder an einem anderen Bauteil der Windenergienanlage, etwa der Nabe, drehbar gelagert.

Etwa bei einem Wert der aktuellen Leistung der Windenenergieanlage im Betrieb, der niedriger ist als die Nennleistung der Windenergieanlage, kann das mindestens eine Rotorblattsegment, vorzugsweise das Blattspitzensegment, relativ zu dem anderen Rotorblattsegment rotiert werden, nämlich derart, dass das Rotorblatteinzelteil mindestens teilweise, vorzugsweise vollständig aus dem Wind rotiert wird, insbesondere zur Reduktion der Schallemissionen des mindestens einen Rotorblattsegments.

Wie oben dargestellt kann die Windenergieanlage auch derart betrieben werden, dass mittels geeigneter Schallsensoren der Schall gemessen wird, der von mindestens einem Rotorblatt und/oder einem Rotorblattsegment erzeugt wird und dass mindestens eines der Rotorblattsegmente abhängig von diesem Schallwert relativ zu einem anderen Rotorblattsegment bewegt wird, etwa mindestens teilweise aus dem Wind gedreht wird, um den Schall zu reduzieren.

In einer weiteren Ausführungsform der Erfindung werden an mindestens einem Rotorblatt angeordnete Mittel zur Führung und/oder Reduktion von Luftströmungen und/oder Verwirbelungen im Bereich der Stoßkanten der Rotorblattsegmente, insbesondere ein oder mehrere Winglets, mittelbar oder unmittelbar abhängig von mindestens einem Betriebsparameter der Windenenergieanlage und/oder von der Windstärke und/oder von dem von mindestens einem Rotorblatt im Betrieb erzeugten Schall geregelt und/oder gesteuert, insbesondere derart, dass Verwirbelungen im Bereich der Stoßkanten der Rotorblattsegmente und/oder ungewollte Druckausgleichsströmungen im Bereich von Spalten zwischen den Stoßkanten reduziert werden.

Weitere Merkmale der vorliegenden Erfindung ergeben sich aus den beigefügten Patentansprüchen, der nachfolgenden Beschreibung eines bevorzugten Ausführungsbeispieles sowie aus den beigefügten Zeichnungen. Darin zeigen:
- Fig. 1: eine erfindungsgemäße Windenergieanlage in Seitenansicht,
- Fig. 2: ein Rotorblatt der Windenergieanlage aus Fig. 1 in einer ersten Stellung, und
- Fig. 3: das Rotorblatt aus Fig. 2 in einer zweiten Stellung.

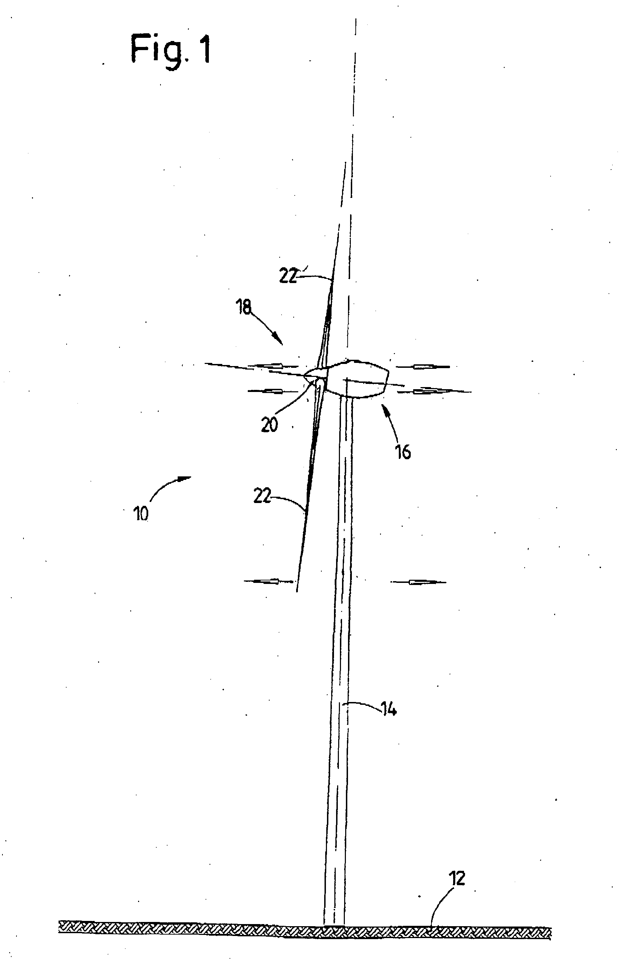

In der Fig. 1 ist eine Windenergieanlage 10 dargestellt, die am oberen Ende eines vertikalen, auf einem horizontalen Untergrund 12 angeordneten Turms 14 eine auf der Turmoberseite angeordnete Gondel 16 aufweist. Wie der Fachmann des Standes der Technik weiß, sind für die genaue Ausbildung eines Turms einer Windenergieanlage vielfältige Ausführungsformen denkbar. Die Erfindung ist naturgemäß nicht auf die in der Zeichnung beschriebene, kegelstumpfförmige Form des Turms 14 beschränkt.

An einem windzugewandten Ende der Gondel 16 ist ein Rotor 18 angeordnet, der eine Nabe 20 aufweist. Mit der Nabe 20 verbunden sind drei Rotorblätter 22, wobei die Rotorblattwurzein der Rotorblätter 22 in entsprechende Öffnungen der Nabe 20 eingesteckt und in bekannter Weise mit dieser verbunden sind.

Der Rotor 18 dreht sich um eine leicht gegenüber der Horizontalen nach oben geneigte Achse. Sobald Wind auf die Rotorblätter 22 trifft, wird der Rotor 18 mitsamt Rotorblättern 22 um die Rotorachse in Rotation versetzt. Die Bewegung der Rotorachse wird von einem innerhalb der Gondel 16 angeordneten, nicht dargestellten Generator in elektrischen Strom umgewandelt.

Die Rotorblätter 22 überstreichen während der Rotation eine Kreisfläche.

Der grundsätzliche Aufbau der Windenergieanlage 10 mit zumindest annähernd horizontaler Rotorachse ist im Stand der Technik bekannt, so dass auf eine detaillierte Darstellung derselben verzichtet wird.

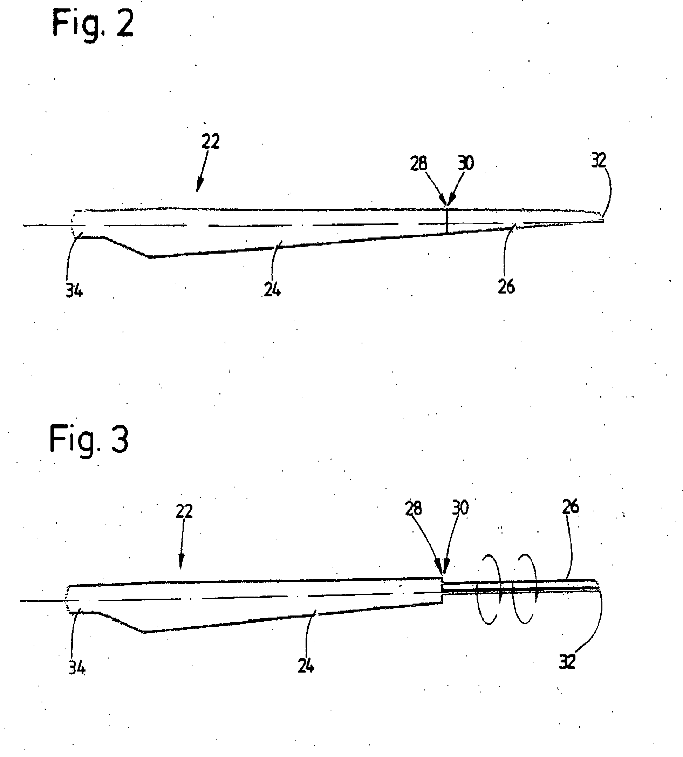

Besonders wichtig ist, dass jedes der drei Rotorblätter 22 der Windenergieanlage 10 in der in den Fig. 2 und 3 dargestellten Weise mehrteilig ausgebildet ist.

In dem dargestellten Ausführungsbeispiel weist das Rotorblatt 22 aus Fig. 2 ein erstes Segment 24 auf sowie ein zweites Segment 26. Die beiden Segmente 24, 26 sind in Längsrichtung des Blattes aneinandergesetzt, mit anderen Worten ist das Rotorblatt 22 bezogen auf die Längsrichtung in die Segmente 24, 26 quergeteilt.

Jedes Segment 24, 26 weist jeweils eine Ansatzfläche 28 bzw. 30 auf, die in dem dargestellten montierten Zustand des Rotorblattes 22 aneinander anliegen. Die beiden Segmente 24, 26 sind dabei an den Ansatzflächen 28, 30 über eine Drehgelenkverbindung verbunden, sodass das Segment 26, das die Blattspitze 32 des Rotorblattes 22 umfasst, relativ zu dem die Blattwurzel 34 des Rotorblattes 22 aufweisenden Segment 24 drehbar ist.

Nicht dargestellt ist eine Spannvorrichtung, die die einzelnen Rotorblattsegmente 24, 26 in Längsrichtung miteinander bzw. mit dem Blattanschluss verspannt. Zu diesem Zweck verlaufen im Inneren der Segmente 24, 26 im Blattspitzenbereich, d.h. im Inneren des Segments 26 befestigte Zugseile, die in Rotorblattlängsrichtung bis zum Blattanschluss des Rotorblattes geführt sind. Im Bereich des Slattanschlusses sind die Zugseile befestigt bzw. auf eine Winde aufgewickelt. Durch entsprechende Aufwicklung des Zugseils auf die Winde können diejenigen Spannkräfte eingestellt werden, mit denen das Blattspitzensegment 26 gegen das Blattwurzelsegment 24 bzw. gegen den Blattanschluss gespannt wird.

Das Rotorblatt 22 ist des Weiteren in seiner Gesamtheit mittels einer motorisch angetriebenen Antriebseinrichtung um seine Längsachse verdrehbar, um den Anstellwinkel des gesamten Rotorblattes 22 einheitlich zum Wind einzustellen bzw. im Rahmen der bekannten Pitch-Regelung zu regeln. Darüber hinaus ist das Blattspitzensegment 26 noch individuell relativ zu dem Blattwurzelsegment 24 verdrehbar, sodass der Windanstellwinkel dieses Segmentes 26 individuell steuer- und/oder regelbar, nämlich partiell pitchbar ist.

Zur geeigneten Regelung und/oder Steuerung der Anstellwinkel des Segmentes 26 bzw. des Anstellwinkel des gesamten Rotorblattes 22 weist die Windenergieanlage 10 eine Steuerungs- und/oder Regelungseinrichtung auf.

Zur - mindestens partiellen - Pitch-Regelung der Windenergieanlage 10 kann damit der Windanstellwinkel des Rotorblattsegmentes 26 eingestellt werden, indem das mindestens eine Rotorblattsegment 26 mindestens zeitweise relativ zu dem anderen Rotorblattsegment 24 rotiert wird.

Dabei wird das Blattspitzensegment 26 zur Regelung der Leistungsabgabe der Windenergieanlage 10 und/oder zur Reduktion des von der Windenergieanlage 10 erzeugten Schalls relativ zu dem anderen Rotorblattsegment 24 rotiert, und zwar vornehmlich bei Windgeschwindigkeiten unterhalb der Abschaltgeschwindigkeit der Windenergieanlage 10.

Das Blattspitzensegment 26 kann mittelbar oder unmittelbar abhängig von mindestens einem Betriebsparameter der Windenenergieanlage 10 und/oder von der Windstärke und/oder von dem von mindestens einem Rotorblatt 22 im Betrieb erzeugten Schall relativ zu dem anderen Rotorblattsegment 24 rotiert werden. Beispielsweise kann die Regelung mittelbar oder unmittelbar abhängig von der vorzugsweise momentanen Leistungsabgabe der Windenergieanlage 10 und/oder der vorzugsweise momentanen Rotordrehzahl und/oder der vorzugsweise momentanen Rotordrehzahlbeschleunigung und/oder der vorzugsweise momentanen Belastung, nämlich der Windlast, mindestens einen Rotorblattes 22 relativ zu dem anderen Rotorblattsegment 24 rotiert werden.

In Fig. 2 ist das Rotorblatt 22 in einer Stellung gezeigt, in der das Blattspitzensegment 26 in einer Ausgangsstellung einen festgelegten Drehwinkel von 0° zu dem Blattwurzelsegment 24 aufweist. In dieser 0°-Stellung fluchtet das Blattspitzensegment 26 mit dem Blattwurzelsegment 24.

In Fig. 3 ist das Rotorblatt 22 dagegen in einer anderen Stellung gezeigt, in der das Blattspitzensegment 26 gegenüber dem Blattwurzelsegment 24 um einen bestimmten Drehwinkel rotiert wurde, in diesem Fall um einen Winkel von 90°.

### Bezugszeichenliste:

- 10: Windenergieanlage
- 12: Untergrund
- 14: Turm
- 16: Gondel
- 18: Rotor
- 20: Nabe
- 22: Rotorblatt
- 24: Segment
- 26: Segment
- 28: Ansatzfläche
- 30: Ansatzfläche
- 32: Blattspitzenende
- 34: Blattwurzel

## Patentansprüche

1. Rotorblatt für eine Windenergieanlage, wobei das Rotorblatt (22), insbesondere zur temporären Reduzierung der Längserstreckung des Rotorblattes (22) während eines Rotorblatttransports, bezogen auf die Rotorblattlängsrichtung mehrteilig, vorzugsweise zweiteilig ausgebildet ist, derart, dass die einzelnen Rotorblattsegmente (24, 26) zur Montage des Rotorblattes (22) in Längsrichtung hintereinander aneinandersetzbar sind, dass mindestens jeweils zwei Rotorblattsegmente (24, 26) drehfest oder drehbar miteinander verbindbar sind, wobei die einzelnen Rotorblattsegmente (24, 26) jeweils eine oder mehrere geeignete Ansatzflächen (28, 30) aufweisen, die im montierten Zustand des Rotorblattes (22) aneinander unmittelbar oder mittelbar anliegen, und dass mindestens eines der einzelnen Rotorblattsegmente (24, 26) mittels einer vorzugsweise steuer- und/oder regelbaren Spannvorrichtung in Richtung des Rotorzentrums einer Windenergieanlage (10) spannbar ist und/oder an einem anderem Rotorblattsegment (24, 26) und/oder an dem Blattanschluss und/oder an der Nabe (20) und/oder einem anderen Bauteil einer Windenergieanlage (10) mittelbar oder unmittelbar unter Spannung befestigbar ist.

2. Rotorblatt gemäß Anspruch 1, **dadurch gekennzeichnet, dass** die einzelnen Rotorblattsegmente (24, 26) untereinander zusätzlich mit lösbaren Verbindungsmitteln verbunden sind bzw. verbindbar sind.

3. Rotorblatt gemäß Anspruch 1 oder 2, **dadurch gekennzeichnet, dass** die Ansatzfläche oder die Ansatzflächen (28, 30) vorzugsweise winklig, insbesondere senkrecht - quer -, zur Längsrichtung des Rotorblattes (22) verlaufen.

4. Windenergieanlage mit einem Rotor (18), der mindestens ein Rotorblatt (22) aufweist sowie mit einem Generator zur Umwandlung der mechanischen Energie des Rotors (18) in elektrische Energie, wobei das Rotorblatt (22) in Längsrichtung mehrteilig ausgebildet ist, derart, dass im montierten Zustand des Rotorblattes (22) mindestens zwei Rotorblattsegmente (24, 26) in Längsrichtung hintereinander aneinandergesetzt sind, wobei die Windenergieanlage (10) über eine vorzugsweise steuer- und/oder regelbare Spannvorrichtung verfügt, mit der wenigstens ein Rotorblattsegment (26), vorzugsweise das das freie Ende, nämlich die Spitze des Rotorblattes (22) umfassende Rotorblattsegment (26) - Blattspitzensegment - in Längsrichtung spannbar oder gespannt ist, vorzugsweise in Richtung des Blattanschlusses des Rotorblattes (22).

5. Windenergieanlage gemäß Anspruch 4, **dadurch gekennzeichnet, dass** die Spannvorrichtung mindestens ein, bevorzugt mehrere, Spannmittel aufweist, insbesondere ein Zugseil, eine Zugkette, ein Zugstrang, eine Zugstange, ein Zugrohr oder dergleichen, das an dem Blattspitzensegment (26) befestigt ist, und das nach Führung entlang einer bestimmten Strecke in Richtung des Blattanschlusses an einem anderen Blattsegment (24) und/oder an dem Blattanschluss und/oder an der Nabe (20) und/oder einem anderen Bauteil der Windenergieanlage (10) mittelbar oder unmittelbar unter Spannung befestigt ist oder befestigbar ist.

6. Windenergieanlage gemäß Anspruch 4 oder 5, **dadurch gekennzeichnet, dass** mindestens eines der Rotorblätter (22), vorzugsweise jedes Rotorblatt (22), bevorzugt steuer- und/oder regelbare Mittel zur Führung und/oder Reduktion von Luftströmungen und/oder Verwirbelungen im Bereich der Stoßkanten der Rotorblattsegmente (24, 26) aufweist, insbesondere ein oder mehrere Winglets.

7. Windenergieanlage gemäß einem oder mehreren der vorhergehenden Ansprüche,
**dadurch gekennzeichnet, dass** mindestens eines der Rotorblattsegmente (26), vorzugsweise das die Spitze des Rotorblattes (22) umfassende Rotorblattsegment - Blattspitzensegment (26) -, relativ zu mindestens einem anderen Rotorblattsegment (24), vorzugsweise zu dem an das Blattspitzensegment unmittelbar angrenzenden Rotorblattsegment (24), rotierbar ist und dass das mindestens eine Rotorblattsegment (26) eine Mehrzahl von unterschiedlichen Drehstellungen relativ zu dem mindestens einen anderen Rotorblattsegment (24) einnehmen kann, mindestens aber mehr als 2 Drehstellungen.

8. Windenergieanlage gemäß Anspruch 7, **dadurch gekennzeichnet, dass** die Windanstellwinkel eines oder mehrerer der anderen Rotorblattsegmente (24) einstellbar sind, vorzugsweise unabhängig voneinander.

9. Windenergieanlage gemäß einem oder mehreren der Ansprüche, **dadurch gekennzeichnet, dass** die Windenergieanlage (10) über einen Antrieb verfügt, insbesondere einen Elektro-Motor, mit dem die Welle in Drehbewegungen entlang der Wellenlängsachse versetzbar ist.
